# EUROPEAN PATENT APPLICATION

(11) **EP 4 851 119 A1**
(43) Date of publication of application: **09.12.2026**
(21) Application number: 26183378.4
(22) Date of filing: 05.06.2026
(51) Int. Cl.: C03C 15/00, C03C 23/00

(54) **ANTI-GLARE FULL-SURFACE ETCHING PROCESS METHOD FOR GLASS SUBSTRATES**

(30) Priority: 06.06.2025 TW 114121274
(71) Applicant: New Ray Innovation Inc., Taoyuan City, 337055 (TW)
(72) Inventor: KUNG, Po Lun, 337055 Taoyuan City (TW); HSU, Hsiu Jui, 300032 Hsinchu City (TW); CHEN, Ming Xiu, 337055 Taoyuan City (TW); HSU, Pin Yun, 300032 Hsinchu City (TW); GARCIA, Mateo-Shiao Long Hsiao, Marana, 85653 (US)
(74) Representative: Cabinet Chaillot

(57) **Abstract**

An anti-glare full-surface etching process method for glass substrates is applicable to multiple glass material types including aluminosilicate glass, soda-lime glass, sapphire glass, ultra-clear glass, and boroaluminosilicate alkali-free glass, for glass having thicknesses in the range of 0.05 mm to 1.0 mm. The method employs a hydrofluoric acid/ammonium fluoride mixed etching solution having a specific viscosity of 12 to 20 cP, comprising 3 to 10 wt% hydrofluoric acid (HF), 5 to 15 wt% ammonium fluoride (NH₄F), 0.1 to 3 wt% surfactant, and the balance water. The process combines alternating vertical and horizontal immersion etching steps with cyclic treatment to achieve uniform full-surface etching, and employs spiral spray-water rinsing to clean the etched substrate without damaging thin glass.

## Description

### BACKGROUND OF THE INVENTION

### 1. FIELD OF THE INVENTION

The present invention relates to a glass surface treatment technology and, more particularly, to an anti-glare (AG) full-surface etching process method applicable to aluminosilicate glass, soda-lime glass, sapphire glass, ultra-clear glass, and boroaluminosilicate alkali-free glass, characterized in that a chemical etching solution of a specific formulation is employed to carry out a full-surface etching treatment process.

### 2. DESCRIPTION OF THE RELATED ART:

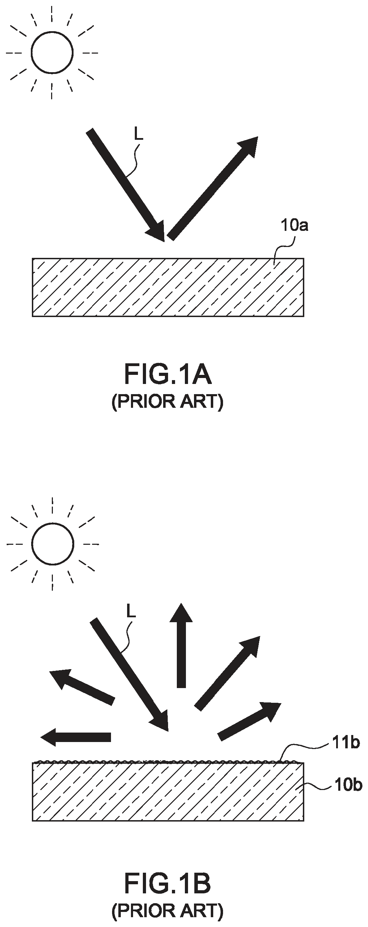

Anti-glare (AG) glass is a type of glass that has undergone special chemical treatment on its surface, resulting in a matte, slow-reflection surface that reduces light source reflections. AG glass surfaces are resistant to fingerprints and highly scratch-resistant, reducing the light reflectance from approximately 8% to about 1%, thereby producing visual comfort and achieving an eye-protection effect. As illustrated in FIG. 1A, conventional plain glass 10a exhibits regular specular reflection. By contrast, as illustrated in FIG. 1B, conventional anti-glare glass 10b exhibits diffused, matte reflection due to the microstructured surface 11.

The mainstream manufacturing methods for AG glass currently available in the market mostly rely on coating layers, laser engraving, or mechanical grinding processes to form microstructures on the raw glass material surface to achieve an anti-glare function. However, such methods are not only costly and have poor durability, but also have disadvantage when processing ultra-thin glass and glass of different material compositions. In particular, when working with aluminosilicate glass, soda-lime glass, and sapphire glass, existing processes are incapable of simultaneously achieving the desired etching depth, surface uniformity, and glass structural stability.

In recent years, manufacturers have attempted to produce anti-glare glass using etching technology as a replacement for traditional sandblasting-type anti-glare glass. Currently, the most common etching glass production uses immersion-type etching technology to form microstructural patterns on the glass surface. For example, Japanese Patent Application Publication No. 2000-114772 discloses such an immersion-type glass etching approach.

However, existing immersion-type glass etching technology suffers from the following deficiencies:
(1) The formulation ratio of the etching solution may be improper, preventing the achievement of optimal etching results;
(2) Because the glass is inserted vertically into the etching solution, the lower portion of the glass is immersed for a comparatively longer period of time, resulting in non-uniform surface pattern formation and a propensity to generate flow marks;
(3) As the glass enters and exits the etching solution, the etching liquid flows downward under gravity, leaving flow marks on the glass surface caused by etching solution movement; and
(4) The range of achievable glass thicknesses is limited, making it impossible to process comparatively thinner glass.

The foregoing problems render it difficult to manufacture thinner etched glass with a low haze value using existing glass etching technologies.

Additionally, Taiwan Patent Publication No. 201615589, entitled "Manufacturing Method of Anti-Glare Glass," attempts to address the foregoing problems by disclosing a method capable of producing glass with a low haze value and good anti-glare effect. The process involves performing wet blasting by spraying at least an abrasive and compressed air onto the glass surface, followed by etching treatment in an etching tank. However, the use of abrasive jetting and compressed air is unsuitable for glass that is increasingly thinner and larger in size, because such glass cannot withstand the pressures involved.

### SUMMARY OF THE INVENTION

A primary object of the present invention is to provide an anti-glare full-surface etching process method for glass substrates, which is applicable to multiple glass material types and different thickness ranges. The method employs a hydrofluoric acid/ammonium fluoride mixed etching solution having a specific viscosity of 12 to 20 cP, combined with an alternating vertical and horizontal immersion etching process, so as to manufacture an AG surface structure with high uniformity, stability, and excellent optical performance.

To achieve the foregoing object, the technical means adopted by the present invention comprises the following steps:
(a) providing a glass substrate having a large-format size and a thickness in the range of 0.05 mm to 1.0 mm;
(b) pre-treatment: cleaning and drying the glass substrate; characterized in that
(c) vertical etching: placing the glass substrate in a vertical orientation into an etching tank **(30)** containing an etching solution **(31)** comprising 3 to 10 wt% hydrofluoric acid (HF), 5 to 15 wt% ammonium fluoride (NH₄F), 0.1 to 3 wt% surfactant, and the balance water, and having a viscosity of 12 to 20 cP at 25°C, this step is used to establish a base rough structure on the glass substrate;
(d) horizontal etching: changing the orientation of the glass substrate from the vertical etching orientation of step (c) to a horizontal etching orientation, this step is used to improve the uniformity of the etching;
(e) cyclic treatment: alternating steps (c) and (d) for 1 to 3 immersion cycles to achieve full-surface etching;
(f) spiral spray-water rinsing: rinsing the full-surface-etched glass substrate from the preceding steps with an aqueous solution, characterized in that a plurality of spiral nozzles **(40)** arranged in a row spray the aqueous solution vertically downward, the glass substrate is conveyed horizontally beneath the spiral nozzles **(40)**, and the spiral nozzles **(40)** are positioned at a height of 8 cm to 15 cm above the glass substrate during spraying;
(g) drying and inspection: drying the rinsed glass substrate from step (f) and performing measurements of surface roughness (Ra) and haze, characterized in that an anti-glare thin layer has a roughness value (Ra) of 0.2 to 0.6 µm and a haze value of 7 to 15%; and
(h) completing an anti-glare glass (AG) **(20)** product by etching an anti-glare thin layer into the surface of the glass substrate.

Also, in one feasible embodiment based on the foregoing features, the glass substrate is composed of any one of aluminosilicate glass, soda-lime glass, sapphire glass, ultra-clear glass, or boroaluminosilicate alkali-free glass.

Also, in step (b), the glass substrate is cleaned using an alkaline solution.

Also, in step (f), the aqueous solution may be clean water or deionized water.

Also, the anti-glare glass (AG) **(20)** produced by the method comprises: a glass substrate having a large-format size with a thickness in the range of 0.05 mm to 1.0 mm; and an anti-glare thin layer etched into the surface of the glass substrate, characterized in that an anti-glare thin layer has a roughness value (Ra) of 0.2 to 0.6 µm and a haze value of 7 to 15%.

Also, the glass substrate is a large-format glass substrate measuring 1500 mm × 1850 mm.

With the foregoing technical means, the present invention achieves the following beneficial effects:
(1) The present invention employs a hydrofluoric acid/ammonium fluoride mixed etching solution formulation having a viscosity of 12 to 20 cP, comprising 3 to 10 wt% hydrofluoric acid (HF), 5 to 15 wt% ammonium fluoride (NH₄F), and 0.1 to 3 wt% surfactant; this combination achieves optimal etching results.
(2) The present invention combines vertical etching and horizontal etching in an alternating immersion cyclic process, resulting in uniform surface patterns on the glass substrate, solving the deficiency of flow marks caused by conventional vertical immersion, and achieving a uniform full-surface etching effect.
(3) The present invention avoids the use of abrasive jetting and compressed air; instead, by utilizing a hydrofluoric acid/ammonium fluoride mixed etching solution of specific viscosity combined with an alternating vertical and horizontal immersion cyclic process, these complementary elements enable processing of large-format glass with thicknesses of 0.05 mm to 1.0 mm, thereby overcoming the deficiencies of conventional processes and providing industrial utility.

### BRIEF DESCRIPTION OF THE DRAWINGS

FIG. 1A is a schematic diagram illustrating light reflection from conventional plain glass.
FIG. 1B is a schematic diagram illustrating light reflection from conventional anti-glare glass.
FIG. 2 is a process flowchart of the present invention.
FIG. 3 is a schematic diagram of the vertical etching step of the present invention.
FIG. 4 is a schematic diagram of the horizontal etching step of the present invention.
FIG. 5A is a schematic diagram of the spiral nozzle of the present invention.
FIG. 5B is a schematic diagram of the spiral spray-water rinsing of the present invention.
FIG. 6 is a perspective view of the anti-glare glass produced by the present invention.
FIG. 7 is an enlarged cross-sectional view taken along line 7-7 of FIG. 6.
FIG. 8 is a main-image photograph of surface roughness measurement of the present invention.
FIG. 9 is a three-dimensional (3D) image photograph of surface roughness measurement of the present invention.
FIG. 10A, FIG. 10B, and FIG. 10C are profile measurement photographs of the present invention.
FIG. 11A, FIG. 11B, and FIG. 11C are line roughness measurement photographs of the present invention.
FIG. 12A, FIG. 12B, and FIG. 12C are multi-line roughness measurement photographs of the present invention.

### DETAILED DESCRIPTION OF THE PREFERRED EMBODIMENT

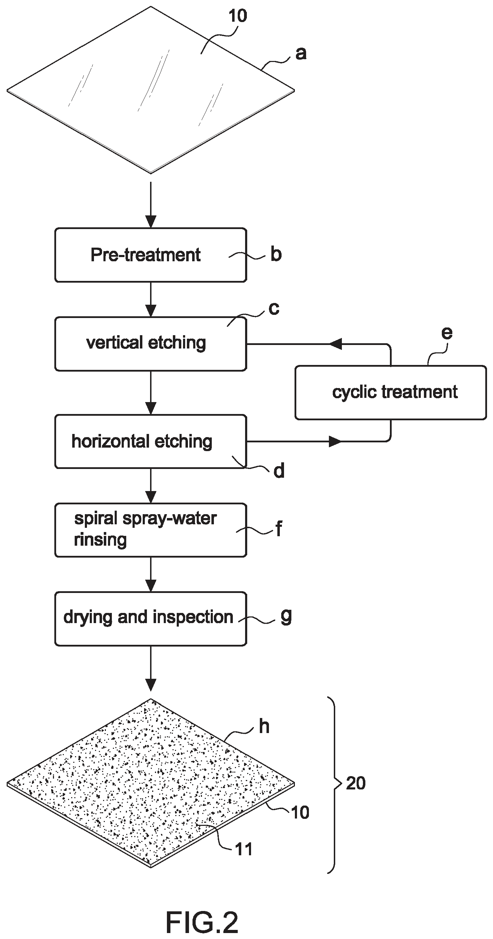

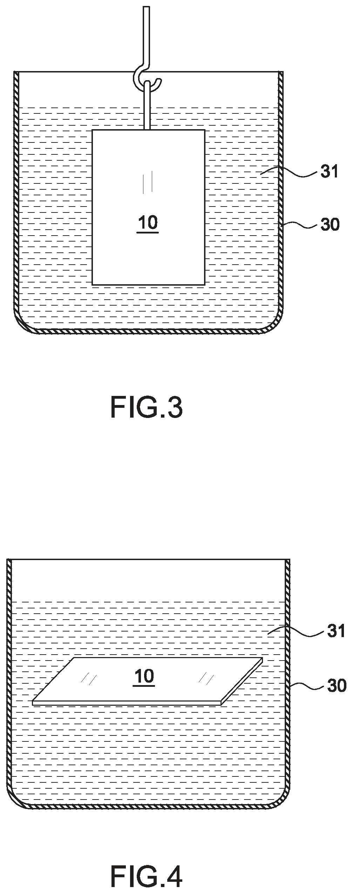

Referring to FIGS. 2~8, there is shown a preferred feasible embodiment of the anti-glare full-surface etching process method for glass substrates of the present invention. The steps comprise:
Step (a): Providing a glass substrate **10** having a large-format size and a thickness in the range of 0.05 mm to 1.0 mm. In this embodiment, the glass substrate **10** is composed of any one of aluminosilicate glass, soda-lime glass, sapphire glass, ultra-clear glass, or boroaluminosilicate alkali-free glass.

Step (b): Pre-treatment - Cleaning and drying the glass substrate **10**. In this embodiment, the glass substrate **10** is cleaned using an alkaline solution, but not limited to this.

Step (c): Vertical etching - Placing the glass substrate **10** in a vertical orientation into an etching tank **30**. The etching solution **31** within the etching tank **30** comprises: 3 to 10 wt% hydrofluoric acid (HF), 5 to 15 wt% ammonium fluoride (NH₄F), 0.1 to 3 wt% surfactant, and the balance water, with a viscosity of 12 to 20 cP at 25°C. This step is used to establish the base rough structure of the glass substrate **10**.

Step (d): Horizontal etching - Changing the orientation of the glass substrate **10** from the vertical etching orientation of step (c) to a horizontal etching orientation. This step is used to improve the uniformity of the etching.

Step (e): Cyclic treatment - Alternating steps (c) and (d) for 1 to 3 immersion cycles to achieve full-surface etching.

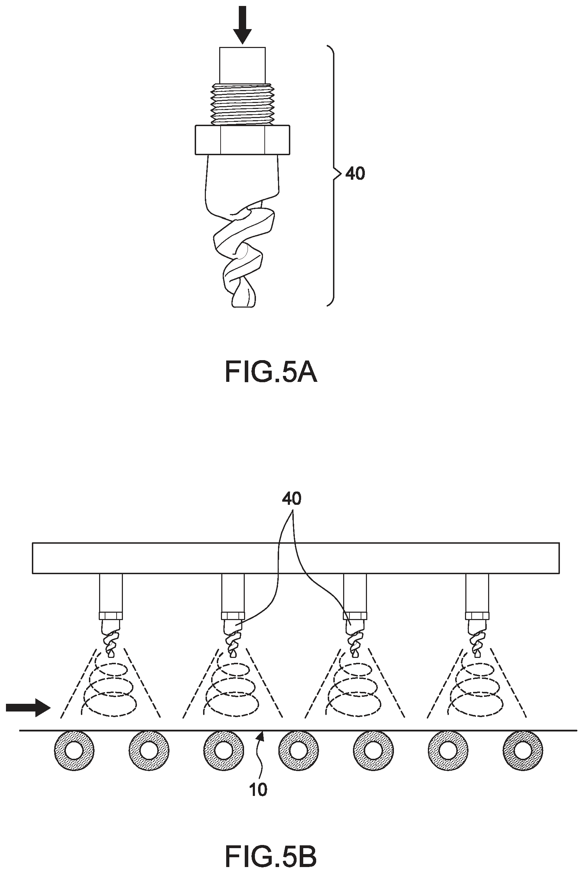

Step (f): Spiral spray-water rinsing - Rinsing the full-surface-etched glass substrate **10** from the preceding steps with an aqueous solution. In this embodiment, as shown in FIG. 5A and FIG. 5B, a plurality of spiral nozzles **40** arranged in a row spray the aqueous solution vertically downward. The glass substrate **10** is conveyed horizontally beneath the spiral nozzles **40**, and the spiral nozzles **40** are positioned at a height of 8 cm to 15 cm above the glass substrate **10** during spraying. Spiral spray-water rinsing constitutes one of the important features of the present invention because the glass substrate **10** has a thickness of only 0.05 mm to 1.0 mm and is extremely thin. Therefore, if a conventional nozzle were used to spray water directly, the water pressure would damage and cause fracturing of the glass substrate **10**. In contrast, the spiral spray-water rinsing allows the water stream to diffuse spirally downward without directly impacting the glass substrate **10**. By maintaining a spray height of 8 cm to 15 cm, effective cleaning is achieved.

In this embodiment, the aqueous solution is clean water or deionized water. Deionized water refers to water obtained by processing natural water to remove cations (such as sodium, calcium, and iron) and anions (such as chloride and bromide), retaining only water molecules (H₂O) and small amounts of free water molecules (H₃O⁺ and OH⁻).

Step (g): Drying and inspection - Drying the rinsed glass substrate **10** from step (f) and performing measurements of roughness value (Ra) and haze value.

Step (h): Completing an anti-glare glass (AG) **20**.

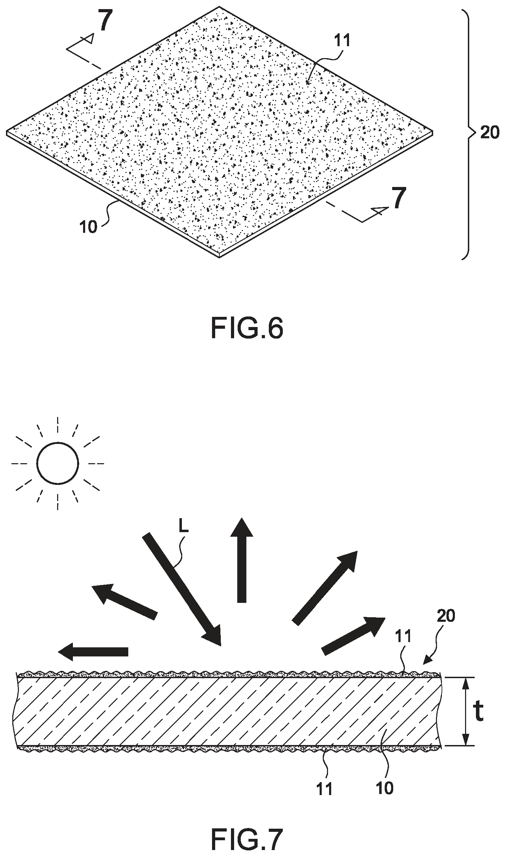

The anti-glare glass **20** produced by the foregoing method, as shown in FIG. 6 and FIG. 7, comprises: a glass substrate **10** that is a large-format glass substrate having a thickness (t) of 0.05 mm to 1.0 mm; and an anti-glare thin layer **11** etched into the surface of the glass substrate **10**, and the anti-glare thin layer **11** has a roughness value (Ra) of 0.2 to 0.6 µm and a haze value of 7 to 15%.

In this embodiment, the glass substrate **10** may be a large-format glass substrate measuring 1500 mm × 1850 mm, which corresponds to 6th generation LCD glass dimensions.

With the features disclosed above, the most critical steps of the "Anti-Glare Full-Surface Etching Process Method for Glass Substrates" of the present invention are: step (c) vertical etching, step (d) horizontal etching, step (e) cyclic treatment, and step (f) spiral spray-water rinsing. Among these, step (c) discloses the etching solution **31** comprising primarily 3 to 10 wt% hydrofluoric acid (HF), 5 to 15 wt% ammonium fluoride (NH₄F), 0.1 to 3 wt% surfactant, and the balance water, having a viscosity of 12 to 20 cP at 25°C. Therefore, the formulation ratio and viscosity of the etching solution **31** constitute a primary feature of the present invention. This formulation and viscosity differ from conventional hydrofluoric acid etching solutions in that the etching solution **31** possesses appropriate adhesion and performs micro-etching on the glass substrate **10**. Furthermore, the present invention combines vertical etching and horizontal etching in an alternating immersion cyclic process, resulting in uniform surface patterns on the glass substrate **10**, solving the deficiency of conventional vertical immersion in which non-uniform surface pattern formation and flow marks occur, and achieving a uniform full-surface etching effect. Finally, the spiral spray-water rinsing thoroughly cleans the etching solution from the surface of the glass substrate **10**.

By the complementary interaction of these four steps, an anti-glare thin layer **11** with a roughness value (Ra) of 0.2 to 0.6 µm and a haze value of 7 to 15% is achieved, thereby obtaining an AG surface structure that provides blue-light resistance, anti-reflection, anti-glare, and polarization effects. In this embodiment, the anti-glare thin layer **11** is formed on one surface of the glass substrate **10**, or formed on both the upper and lower surfaces of the glass substrate **10**. If formation on only one surface of the glass substrate **10** is required, the other surface only requires to be covered with an adhesive protective film.

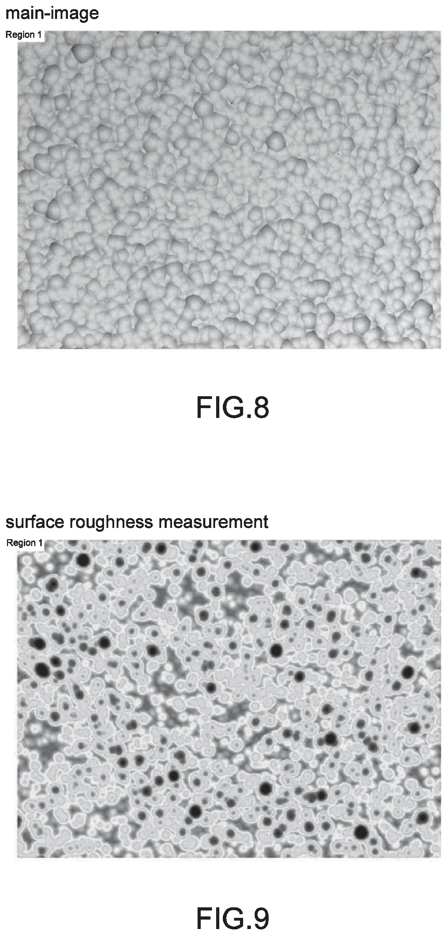

Referring to FIG. 8, which shows the main-image photograph of surface roughness measurement of the present invention, and FIG. 9, which shows the three-dimensional (3D) image photograph of surface roughness measurement of the present invention. The measurement results are as follows:

| | **Sa (µm)** | **Sz (µm)** | **Str** | **Spc (1/mm)** | **Sdr** |
|---|---|---|---|---|---|
| Maximum | 0.284 | 2.910 | 0.927 | 1420.447 | 0.02776 |
| Minimum | 0.284 | 2.910 | 0.927 | 1420.447 | 0.02776 |
| Average | 0.284 | 2.910 | 0.927 | 1420.447 | 0.02776 |
| Std. Deviation | 0.000 | 0.000 | 0.000 | 0.000 | 0.00000000 |
| Region 1 | 0.284 | 2.910 | 0.927 | 1420.447 | 0.02776 |

Characterized in that:
Sa: Arithmetic mean height of the surface
Sz: Maximum height of the surface
Str: Surface texture aspect ratio
Spc: Arithmetic mean peak curvature
Sdr: Developed interfacial area ratio

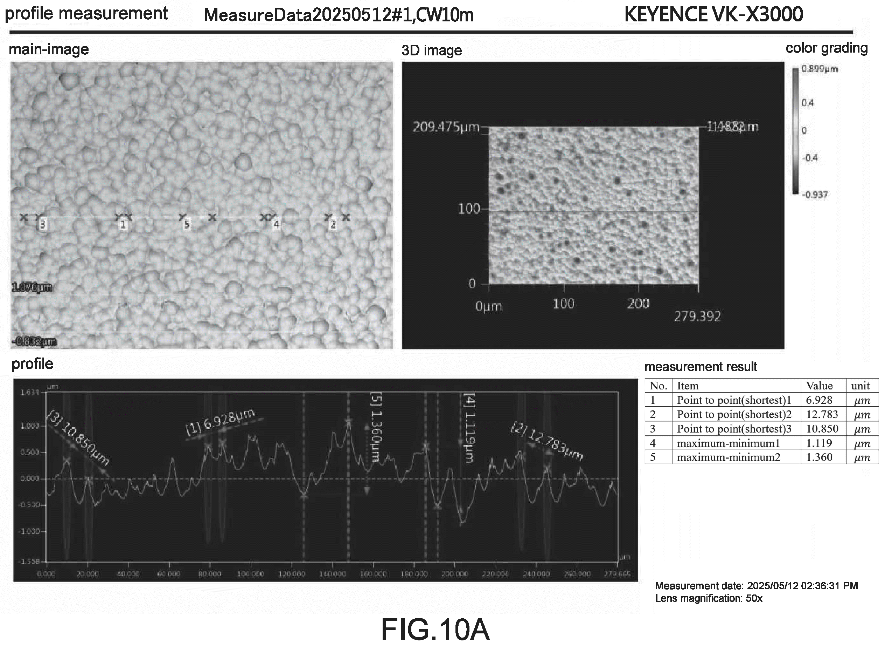

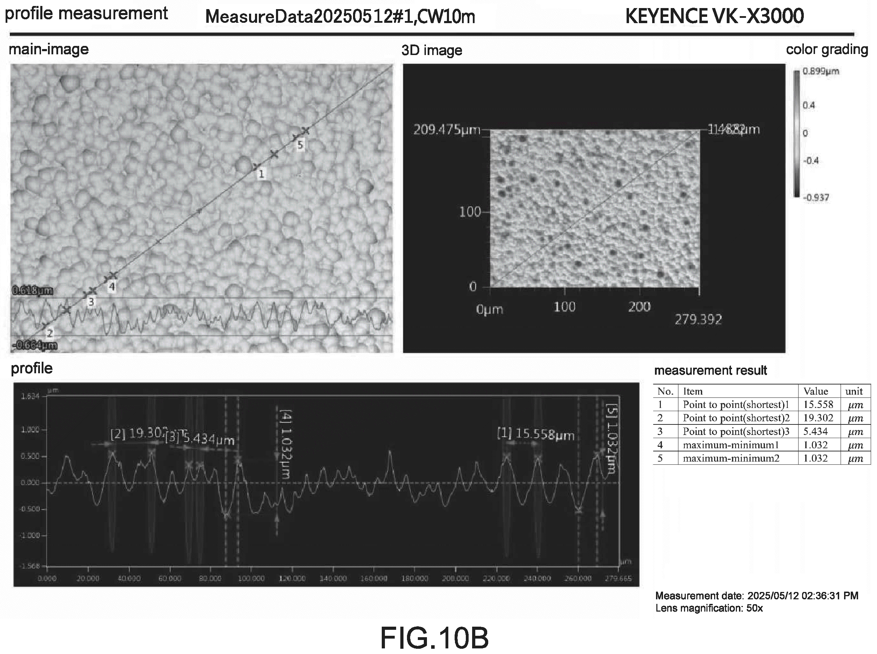

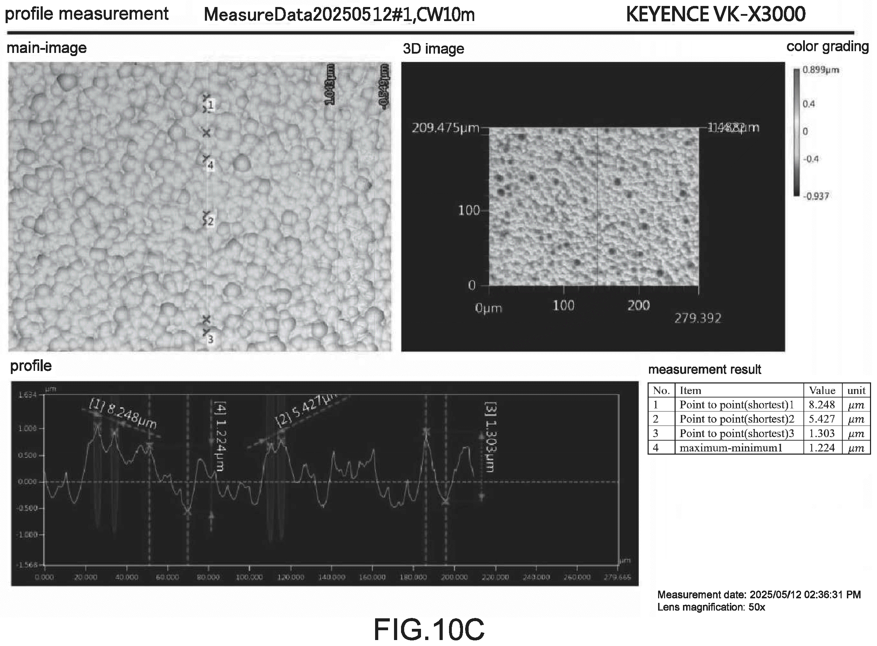

The following figures display microscopic observation and analysis of the experimental results of the present invention. FIG. 10A, FIG. 10B, and FIG. 10C show multi-directional profile measurement photographs and data of the present invention, where FIG. 10A is a horizontal measurement, FIG. 10B is a diagonal measurement, and FIG. 10C is a vertical measurement. These figures reveal the following:
(1) The surface structure consists of uniformly distributed random micro-pit craters (approximately 200 to 210 µm in width) with depths in the range of Ra = 0.2 to 0.6 µm;
(2) The waveform fluctuations in the X/Y axes and diagonal directions are consistent, indicating highly uniform etching results;
(3) The three-dimensional height distribution map demonstrates stable light diffusion capability; and
(4) The product is suitable for medium-to-high haze values exhibiting approximately 7 to 15%.

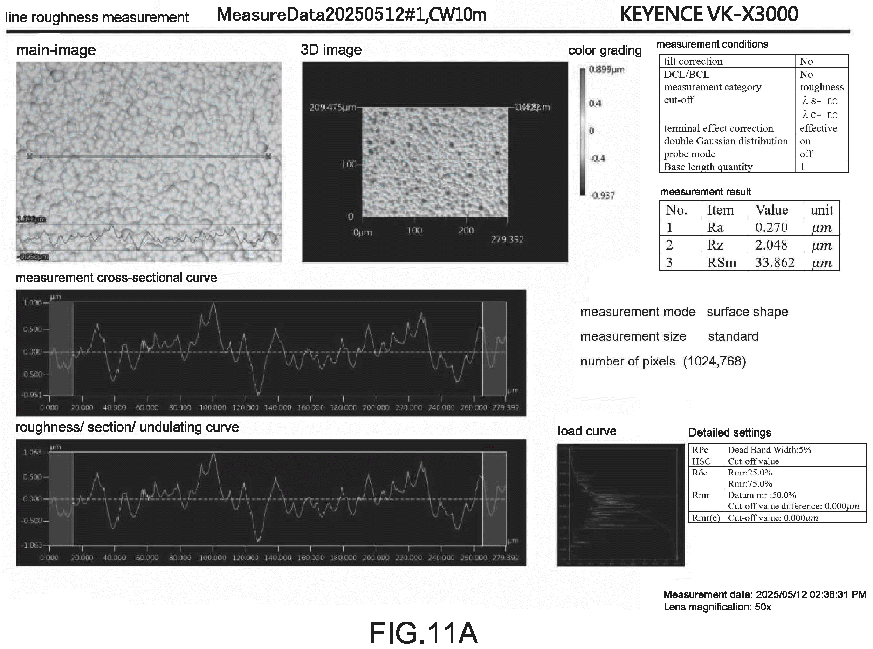

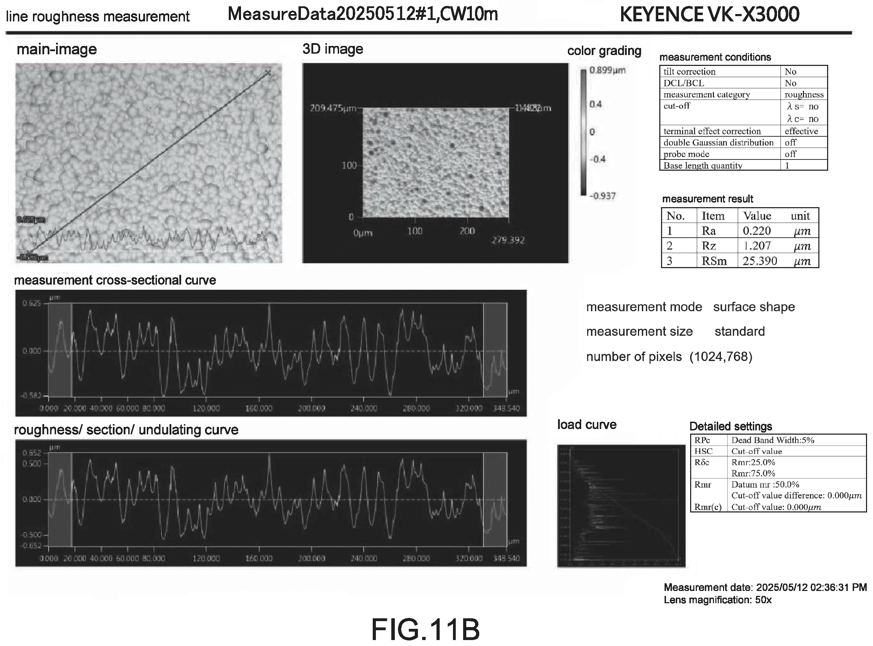

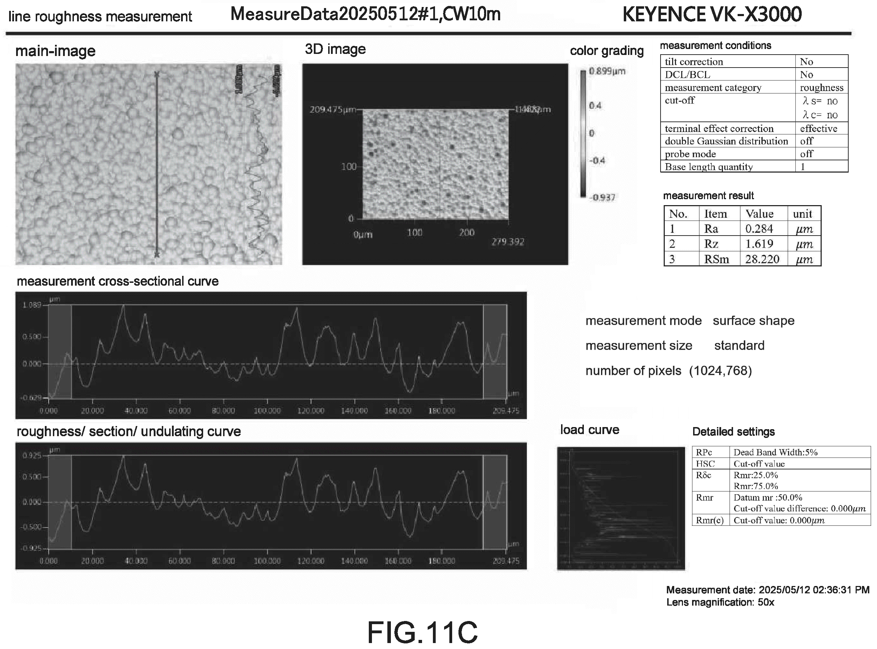

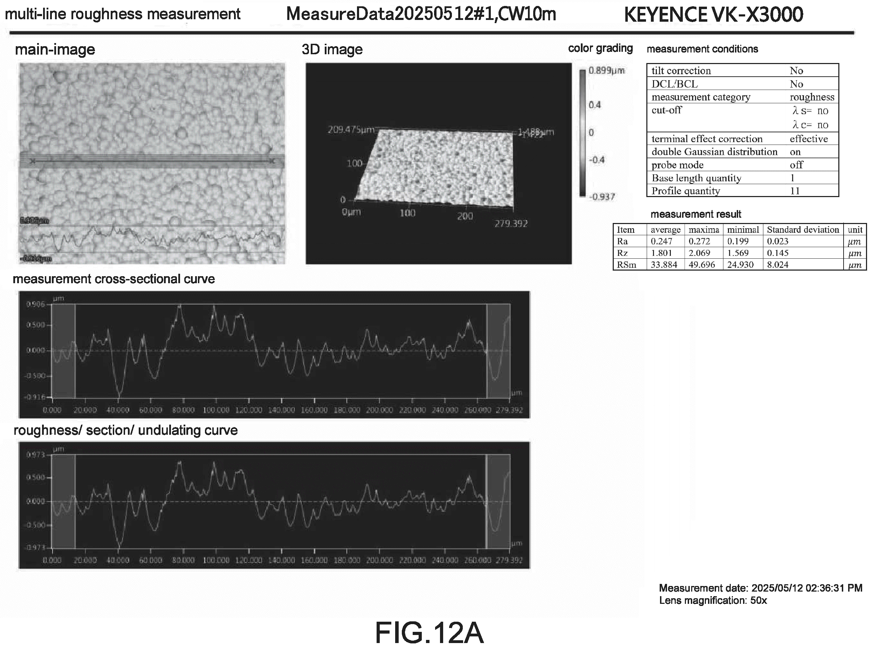

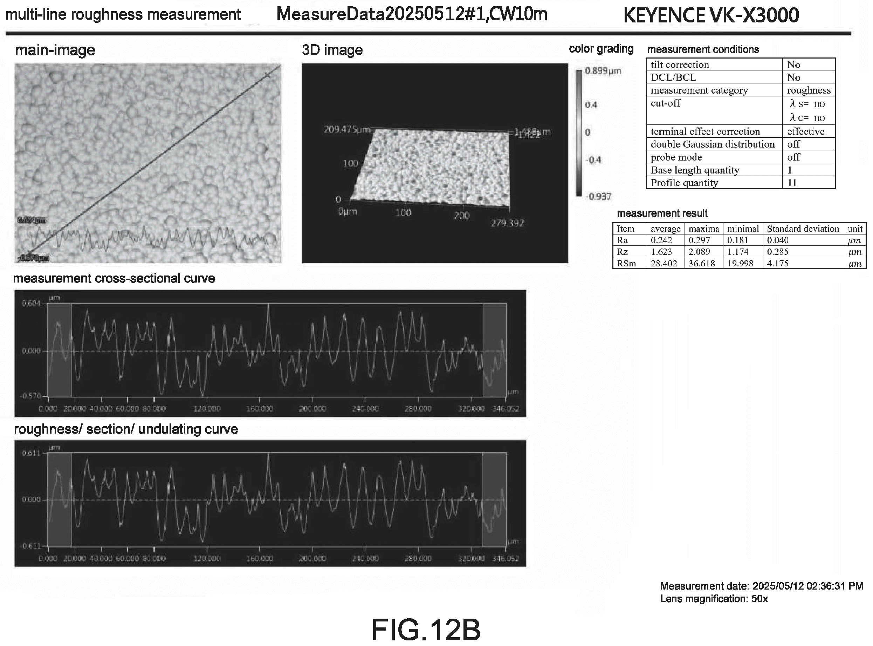

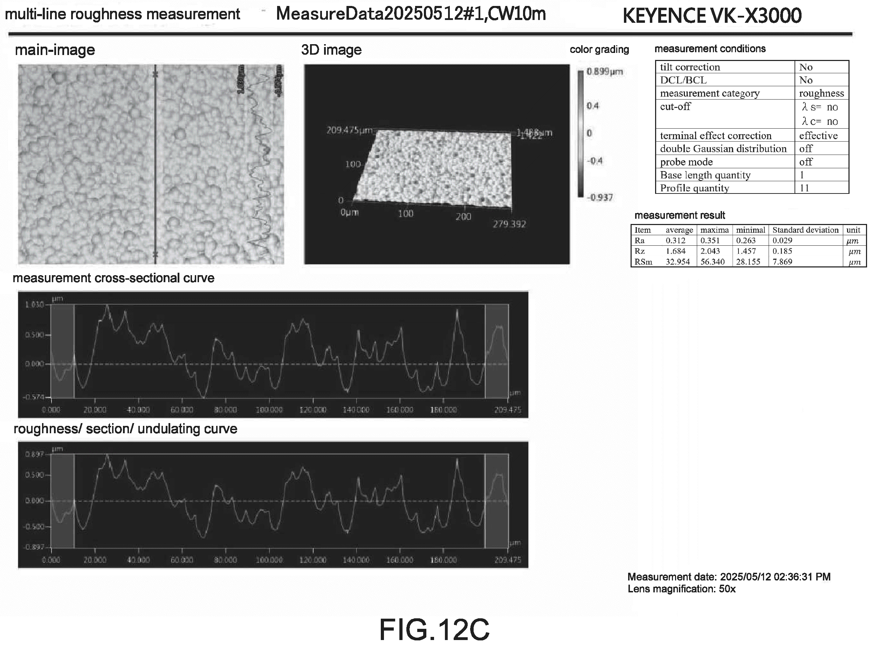

FIG. 11A, FIG. 11B, and FIG. 11C show the line roughness measurement photographs of the present invention. FIG. 12A, FIG. 12B, and FIG. 12C show the multi-line roughness measurement photographs of the present invention. From these display results:
(1) Surface profile analysis: Multi-angle measurements indicate that the chemically etched surface has a random microstructure with a roughness value (Ra) of approximately 0.2 to 0.6 µm, which effectively diffuses light sources;
(2) Unetched vs. etched comparison: The untreated surface is smooth and featureless, while after etching an orange-peel-pattern random structure is formed with a high haze effect;
(3) Multi-region profiles: Different regions display similar profile undulations, with peak-to-valley (P-V) values in the range of 1 to 2 µm, suitable for Haze 7 to 15% applications;
(4) Multi-directional consistency: Horizontal, vertical, and diagonal measurement curves are uniformly consistent, demonstrating good process control with no directional defects;
(5) Microstructure classification: Bubble-type, island-type, and protrusion-type structures correspond to different haze design requirements, with Ra adjustable in the range of 0.2 to 0.6 µm by varying the formulation; and
(6) Summary: Chemically etched AG glass demonstrates excellent haze-control capability and microstructural stability, making it suitable for eye-protection glass, high-end optical applications, and display applications.

With features disclosed above, the present invention achieves the following beneficial effects:
(1) The present invention employs a hydrofluoric acid/ammonium fluoride mixed etching solution formulation having a viscosity of 12 to 20 cP, comprising 3 to 10 wt% hydrofluoric acid (HF), 5 to 15 wt% ammonium fluoride (NH₄F), and 0.1 to 3 wt% surfactant; this combination achieves optimal etching results.
(2) The present invention combines vertical etching and horizontal etching in an alternating immersion cyclic process, resulting in uniform surface patterns on the glass substrate, solving the deficiency of flow marks caused by conventional vertical immersion, and achieving a uniform full-surface etching effect.
(3) The present invention avoids the use of abrasive jetting and compressed air; instead, by utilizing a hydrofluoric acid/ammonium fluoride mixed etching solution of specific viscosity combined with an alternating vertical and horizontal immersion cyclic process and spiral spray-water rinsing that does not directly impact the glass substrate, these complementary elements enable processing of large-format glass with thicknesses of 0.05 mm to 1.0 mm, thereby overcoming the deficiencies of conventional processes and providing significant industrial utility.

Although particular embodiment of the invention has been described in detail for purposes of illustration, various modifications and enhancements may be made without departing from the spirit and scope of the invention. Accordingly, the invention is not to be limited except by the appended claims.

## Claims

1. An anti-glare full-surface etching process method for glass substrates, comprising the steps of:
(a) providing a glass substrate **(10)** comprising a large-format glass having a thickness in the range of 0.05 mm to 1.0 mm;
(b) Pre-treatment: Cleaning and drying the glass substrate **(10)**; **characterized in that**:
(c) vertical etching: placing the glass substrate **(10)** in a vertical orientation into an etching tank containing an etching solution comprising 3 to 10 wt% hydrofluoric acid (HF), 5 to 15 wt% ammonium fluoride (NH₄F), 0.1 to 3 wt% surfactant, and the balance water, and having a viscosity of 12 to 20 cP, this step is used to establish a base rough structure on the glass substrate **(10)**;
(d) horizontal etching: changing the orientation of the glass substrate **(10)** from the vertical etching orientation of step (c) to a horizontal etching orientation, this step is used to improve the uniformity of the etching;
(e) cyclic treatment: alternating steps (c) and (d) for 1 to 3 immersion cycles to achieve full-surface etching;
(f) spiral spray-water rinsing: rinsing the full-surface-etched glass substrate **(10)** with an aqueous solution using a plurality of spiral nozzles arranged in a row that spray the aqueous solution vertically, the glass substrate **(10)** being conveyed horizontally beneath the spiral nozzles, and the spiral nozzles being positioned at a height of 8 cm to 15 cm above the glass substrate **(10)** during spraying;
(g) drying and inspection: drying the rinsed glass substrate **(10)** from step (f) and measuring a roughness value (Ra) and a haze value thereof, **characterized in that** an anti-glare thin layer **(11)** has a roughness value (Ra) of 0.2 to 0.6 µm and a haze value of 7 to 15%; and
(h) completing an anti-glare glass (AG) product having an anti-glare thin layer **(11)** etched into a surface of the glass substrate **(10)**.

2. The anti-glare full-surface etching process method for glass substrates as claimed in claim 1, **characterized in that** in step (a), the glass substrate **(10)** is composed of any one of aluminosilicate glass, soda-lime glass, sapphire glass, ultra-clear glass, or boroaluminosilicate alkali-free glass.

3. The anti-glare full-surface etching process method for glass substrates as claimed in claim 1, **characterized in that** in step (b), the glass substrate **(10)** is cleaned using an alkaline solution.

4. The anti-glare full-surface etching process method for glass substrates as claimed in claim 1, **characterized in that** in step (f), the aqueous solution is clean water or deionized water.

5. An anti-glare glass (AG) product produced by the anti-glare full-surface etching process method for glass substrates as claimed in claim 1, wherein the anti-glare glass (AG) product comprises:
a glass substrate **(10)** having a large-format size and a thickness in the range of 0.05 mm to 1.0 mm; and
an anti-glare thin layer **(11)** etched into a surface of the glass substrate **(10)**, the anti-glare thin layer **(11)** having a roughness value (Ra) of 0.2 to 0.6 µm and a haze value of 7 to 15%.

6. The anti-glare glass (AG) product as claimed in claim 5, **characterized in that** the glass substrate **(10)** is a large-format glass substrate measuring 1500 mm × 1850 mm.

7. The anti-glare glass (AG) product as claimed in claim 5, **characterized in that** the anti-glare thin layer **(11)** is formed on one surface of the glass substrate **(10)**, or formed on both an upper surface and a lower surface of the glass substrate.
